# EUROPÄISCHE PATENTSCHRIFT

(11) **EP 2 404 494 B1**
(45) Veröffentlichungstag und Bekanntmachung des Hinweises auf die Patenterteilung: **02.04.2014**
(21) Anmeldenummer: 11401534.0
(22) Anmeldetag: 23.06.2011
(51) Int. Cl.: A01C 17/00

(54) **Dosiereinrichtung**
Metering device
Dispositif de dosage

(30) Priorität: 09.07.2010 DE 102010036308
(43) Veröffentlichungstag der Anmeldung: 11.01.2012
(73) Patentinhaber: Amazonen-Werke H. Dreyer GmbH & Co. KG, 49205 Hasbergen (DE)
(72) Erfinder: Krabbe, Ulrich, 49205 Hasbergen (DE)

(56) Entgegenhaltungen:
- EP-A1- 1 738 632
- EP-A1- 2 119 336
- DE-A1- 3 535 629
- DE-A1-102009 007 782

## Beschreibung

Die Erfindung betrifft eine Dosiereinrichtung einer einen Vorratsbehälter aufweisenden landwirtschaftlichen Verteilmaschine.

Derartige Dosiereinrichtungen für als Schleuderstreuer ausgebildete Verteilmaschine sind beispielsweise durch die EP 28 18 816 A1 oder EP 0 542 112 A1 bekannt. Diese Dosiereinrichtungen sind unterhalb der Auslauftrichter der Vorratsbehälter dieser landwirtschaftlichen Verteilmaschinen angeordnet. Diese Dosiereinrichtungen weisen einen mit einer Durchlassöffnung ausgestatteten Boden auf. Die Öffnungsweite der Durchlassöffnung ist mittels eines zugeordneten Schiebers zu verschließen und in ihrer Öffnungsweise einzustellen. Hierzu sind an dem Schieber in zwei Einstellrichtungen wirksame Verstellelemente angeordnet, um den Schieber jeweils in Schließ- oder Öffnungsstellung zu bringen. Die Öffnungsstellung wird mittels eines einstellbaren Anschlagelementes bestimmt, an dem der Schieber in seiner Öffnungsstellung zur Anlage kommt.

Bei den Verteilmaschinen der beiden vorgenannten Dokumente wird der Schieber jeweils mittels eines Federelementes in Öffnungsstellung gebracht und durch ein motorisches Stellelement in seine Schließstellung.

Durch die Ausgestaltung des Öffnungselementes für den Schieber als Federelement kann es unter schwierigen Einsatzbedingungen, insbesondere wenn der Schieber nach längerem Gebrauch bei mangelhafter Wartung zum Klemmen neigt, dazu kommen, dass der Schieber nur langsam in seine Öffnungsstellung gelangt oder diese unter Umständen überhaupt nicht erreicht.

Bei einem weiteren bekannten Stand der Technik, mittels welchem der Schieber durch ein in zwei entgegengesetzten Richtungen wirksames motorisches Stellelement jeweils sicher in die Öffnungs- oder Schließstellung gebracht wird. Hier ist jedoch nachteilig, dass, wenn der Schieber von einem motorischen Stellelement in Öffnungsstellung gebracht wird und die Schieberstellung durch Anlage des Schiebers an einem Anschlagelement bestimmt wird, immer ein großer Druck von dem motorischen Stellelement in ungedämpfter und ungefederter Weise auf das Anschlagelement ausgeübt wird. Dies führt zu großen Belastungen des Verstellelementes, des Schiebers und des Anschlagelementes, sowie weiterer evtl. dazwischen angeordneter Zwischenelemente.

Der Erfindung liegt die Aufgabe zugrunde, eine vereinfachte Betätigungsmöglichkeit für eine Dosiereinrichtung mit einem über ein Verstellelement verstellbarem Schieber zur Einstellung der Öffnungsgröße der Durchlassöffnung zu schaffen.

Diese Aufgabe wird erfindungsgemäß dadurch gelöst, dass das Verstellelement unmittelbar zwischen dem Schieber und der Mengeneinstelleinrichtung angeordnet ist. Infolge dieser Maßnahme werden weder in der Schließposition noch in der Öffnungsposition Kräfte von dem Verstellelement auf den Schieber oder die Mengeneinstelleinrichtung ausgeübt. Eventuell auftretende Kräfte werden von dem Verstellelement selbst aufgenommen.

Eine einfache Ausgestaltung des Verstellelementes ergibt sich dadurch, dass das Verstellelement als doppeltwirkender Hydraulikzylinder ausgebildet ist. Hierbei ist der doppeltwirkende Hydraulikzylinder so dimensioniert, dass sein maximal möglicher Verstellweg gleich dem erforderlichen Verstellweg zum verstellen des Schiebers ist. Selbst bei einer Beaufschlagung des Hydraulikzylinders auch mit höherem Druck, egal in welcher Richtung, werden die Kräfte dann von dem Hydraulikzylinder selbst aufgenommen und nicht in andere Bauteile abgeleitet.

Eine weitere Ausgestaltung des Verstellelementes lässt sich dadurch verwirklichen, dass das Verstellelement als mit einer Feder zusammenwirkender einfachwirkender Hydraulikzylinder ausgebildet ist.

Eine einfache Ausgestaltung der Mengeneinstelleinrichtung lässt sich dadurch erreichen, dass die Mengeneinstelleinrichtung als auf einem Schwenkbolzen verschwenkbar angeordneter und in verschiedene Positionen festsetzbarer Schwenkhebel ausgebildet ist.

Eine besonders einfache und kompakte Ausgestaltung der Dosiereinrichtung lässt sich dadurch erreichen, dass die Mengeneinstelleinrichtung als auf dem Schwenkbolzen, auf dem der Schieber gelagert ist, verschwenkbar angeordneter und in verschiedene Positionen festsetzbarer Schwenkhebel ausgebildet ist.

Um sicherzustellen, dass der Schieber die gesamte Eröffnung abdecken kann, ist vorgesehen, dass der Schieber eine Ausdehnung aufweist, die sich zumindest sich über den doppelten Öffnungswinkel der Auslassöffnung erstreckt.

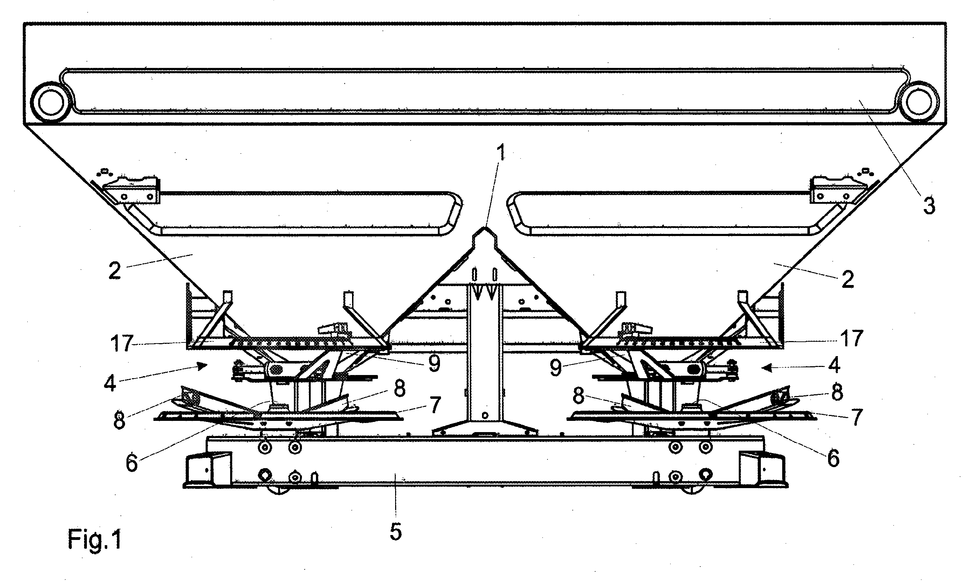

Weitere Einzelheiten der Erfindung sind der Beispielsbeschreibung und den Zeichnungen zu entnehmen. Hierbei zeigen
- Fig. 1: den erfindungsgemäßen Schleuderstreuer in der Ansicht von hinten und in Prinzipdarstellung,

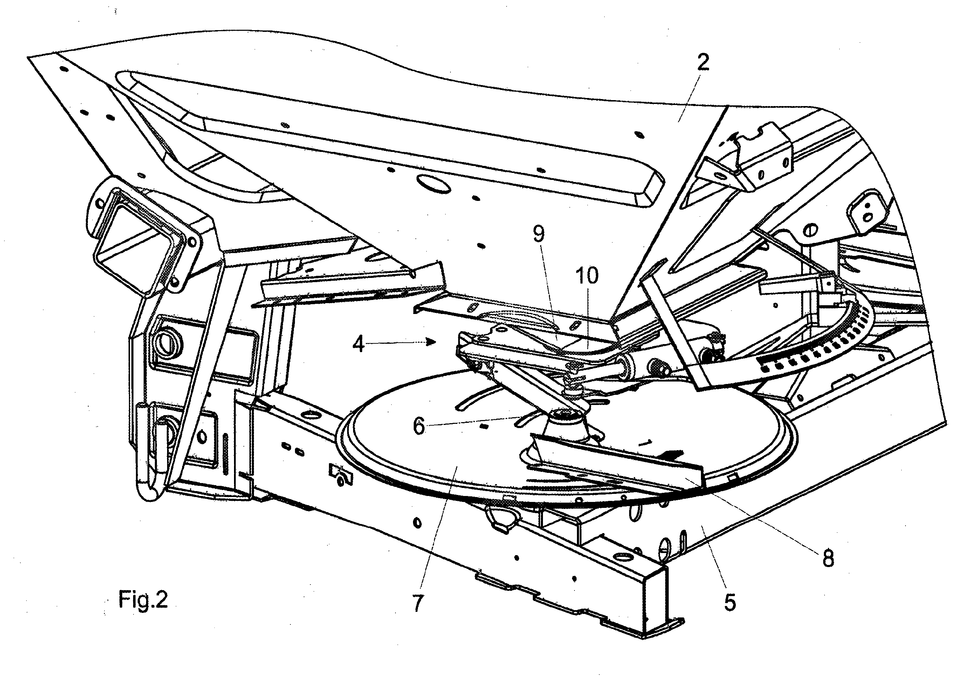

- Fig. 2: den in Fahrtrichtung gesehen linken Bereich des Streuers in perspektivischer Darstellung und in vergrößertem Maßstab,
- Fig. 3: der Boden mit Auslauföffnung und Schieber der Dosiereinrichtung mit Mengeneinstellung "0" und eingefahrenem Einstellelement in der Draufsicht,
- Fig. 4: der Boden mit Auslauföffnung und Schieber der Dosiereinrichtung mit Mengeneinstellung "0" und ausgefahrenem Einstellelement in der Draufsicht,
- Fig. 5: der Boden mit Auslauföffnung und Schieber der Dosiereinrichtung mit Mengeneinstellung "30" und eingefahrenem Einstellelement in der Draufsicht und
- Fig. 6: der Boden mit Auslauföffnung und Schieber der Dosiereinrichtung mit Mengeneinstellung "30" und ausgefahrenem Einstellelement in der Draufsicht.

Die als Zweischeibendüngerstreuer ausgebildete Verteilmaschine weist den durch ein dachförmiges Mittelteil 1 in seinem unteren Bereich in zwei Auslauftrichter 2 aufgeteilten Vorratsbehälter 3 auf. Der Vorratsbehälter 3 ist mit einem nicht dargestellten Rahmen versehen, über den der Schleuderdüngerstreuer an den Dreipunktkraftheber eines Ackerschleppers anzuordnen ist. An den unteren Enden der Auslauftrichter 2 ist jeweils eine Dosiereinrichtung 4 angeordnet. Unterhalb der Dosiereinrichtung 4 sind auf aus einem Getriebeblock 5, der an dem nicht dargestellten Rahmen angeordnet ist, herausragenden und rotierend antreibbaren Wellen 6 Schleuderscheiben 7 mit darauf angeordneten Wurfelementen 8 angeordnet. Die Schleuderscheiben 7 rotieren in bekannter Weise ineinander entgegengesetztem Drehsinn.

Die jeweilige Dosiereinrichtung 4 weist ein topfförmiges Trichterelement 9 auf, in dessen Boden 10 zumindest eine als Auslauföffnung 11 ausgebildete Durchlassöffnung angeordnet ist. Die Durchlassöffnung 11 wirkt mit einem Schieber 12 zusammen. Über den Schieber 12, der unterhalb des Bodens 10 des bodenförmigen Bereiches des Trichterelementes 9 der Dosiereinrichtung 4 angeordnet ist, ist die Öffnung 11 verschließbar und in ihrer Öffnungsweise einstellbar. Der Schieber 12 ist an einem an dem Boden 10 der Dosiereinrichtung 4 in der Schwenkhülse 13 gelagerten Schwenkbolzen 14 verschwenkbar gegenüber der Durchlassöffnung 11 angeordnet.

Der Schieber 12 ist mittels eines als doppeltwirkenden Hydraulikzylinders ausgebildeten Verstellelementes 13 um die durch den Schwenkbolzen 14 verlaufende Schwenkachse in seine jeweilige Schließ- oder Öffnungsstellung zu verschwenken. Auf dem Schwenkbolzen 14 ist weiterhin der Schwenkhebel 15 der Mengeneinstelleinrichtung 16 verschwenkbar gelagert. Der Schwenkhebel 15 ist somit auf dem Schwenkbolzen 14, auf dem der Schieber 12 verschwenkbar angeordnet ist, gelagert. Der Schwenkhebel 15 ist an der an dem Vorratsbehälter 3 angeordneten Einstellskala 17 mittels eines geeigneten Festsetzelementes 18 in der jeweils gewünschten Position festzusetzen.

Der Hydraulikzylinder 13 ist einerseits an dem Schieber 12 und andererseits an dem Schwenkhebel 15 mittels Verbindungselementen 19 befestigt. Somit ist das als Hydraulikzylinder 13 ausgebildete Verstellelement unmittelbar zwischen dem Schieber 12 und dem Schwenkhebel 15 der Mengeneinstelleinrichtung 16 angeordnet. Die beiden Anschlüsse 20 und 21 des Hydraulikzylinders 13 sind über Hydraulikleitungen an eine Hydraulikanlage, beispielsweise die des den Schleuderstreuer tragenden Ackerschleppers, angeschlossen.

Durch den in verschiedenen Positionen festsetzbaren Schwenkhebel 15 der Mengeneinstelleinrichtung 16 nimmt der Schieber 12 in seiner Öffnungsstellung, in welcher er einen vorbestimmten Querschnitt 22 der Auslassöffnung 11 freigibt, jeweils eine vorbestimmte Position ein.

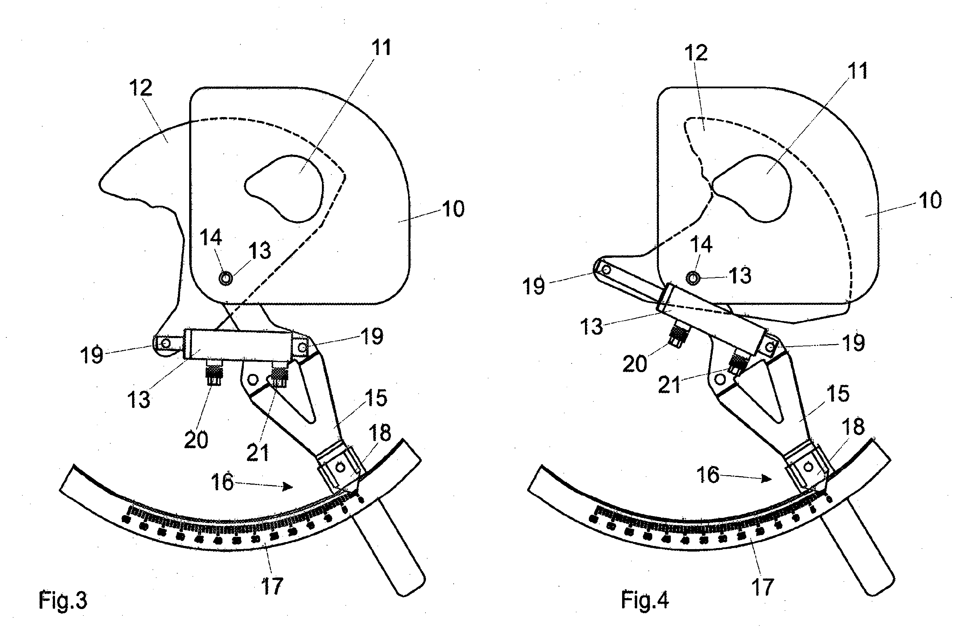

Der Schieber 12 weist eine Ausdehnung auf, die sich zumindest über den doppelten Öffnungswinkel der Auslassöffnung 11 erstreckt, wie beispielsweise der Fig. 3 zu entnehmen ist.

Die Funktionsweise ist folgende:
Gemäß der Fig. 3 ist der Schwenkhebel 15 in die Position "0" eingestellt. Weiterhin ist der Hydraulikzylinder 13 eingefahren, dies bedeutet, dass der Schieber 12 die Auslassöffnung 11 völlig abdeckt, so dass kein Material der Schleuderscheibe 7 zugeführt wird. Wenn der Schieber 12 nun bei der eingestellten Position "0" für den Schwenkhebel 15 der Mengeneinstelleinrichtung 16 ausgefahren wird, das heißt, der Schieber 12 wird an sich in seine Öffnungsposition geschwenkt, so deckt der Schieber 12 aufgrund seiner großen Ausdehnung und erfinderischen Ausgestaltung der Mengeneinstelleinrichtung 16, wie der Fig. 4 zu entnehmen ist, immer noch die Auslassöffnung 11 vollständig ab, so dass entsprechend der Einstellung des Schwenkhebels 15 auf der Position "0" kein Material der Schleuderscheibe 7 zugeleitet wird.

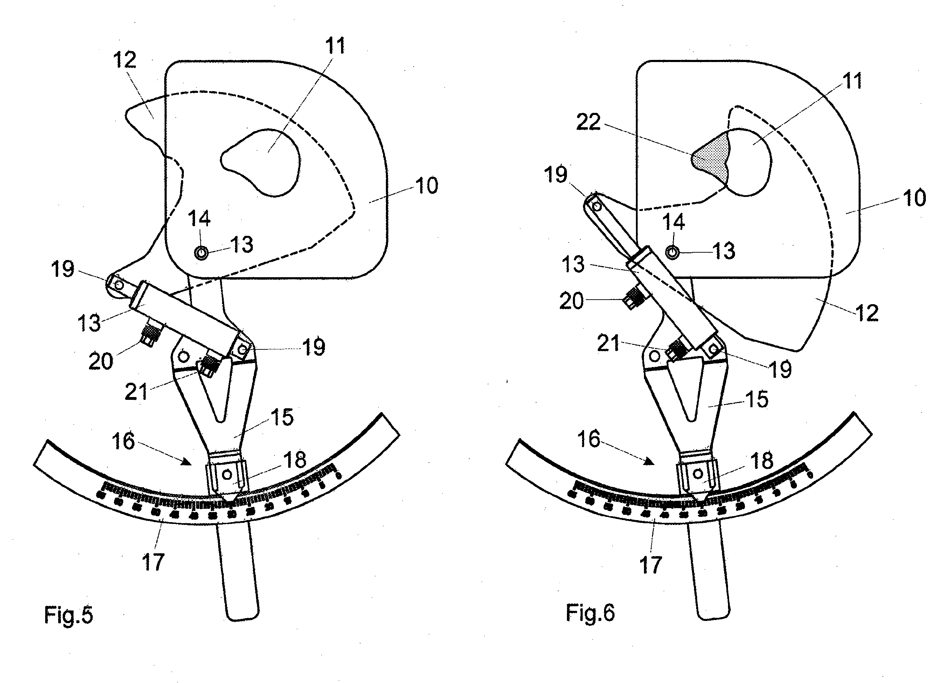

Wenn jedoch der Schwenkhebel 15 der Mengeneinstelleinrichtung 16 auf eine Position größerer "0", beispielsweise wie in Fig. 5 und 6 auf Position "30" eingestellt wird, so deckt der Schieber bei eingefahrenem Hydraulikzylinder 13, das heißt in seiner Schließposition die Auslassöffnung 11 vollständig ab, jedoch wenn der Hydraulikzylinder 13 voll ausgefahren wird, gibt der Schieber 12 jetzt den gewünschten Querschnitt 22 der Auslauföffnung 11 frei. Durch den freigegebenen Querschnitt 22 der Auslassöffnung 11 wird dann Material in entsprechender Menge der Schleuderscheibe 7 zugeleitet.

Diese erfindungsgemäße Mengeneinstelleinrichtung 16 zeichnet sich dadurch aus, dass sie von dem motorischen Einstellelement, welches von dem Hydraulikzylinder 13 gebildet wird, keine Kräfte in Teile der Mengeneinstell- 16 und/oder Dosiereinrichtung 6 überträgt, sondern sämtliche Kräfte die entstehen, von dem Hydraulikzylinder 13 selbst bzw. dessen Bauteilen aufgenommen werden. Der Hydraulikzylinder selbst wird jeweils auf "Anschlag" gefahren.

Ergänzend sei noch darauf hingewiesen, dass das Verstellelement auch als mit einer Feder zusammenwirkender einfachwirkender Hydraulikzylinder ausgebildet sein kann.

## Patentansprüche

1. Dosiereinrichtung einer einen Vorratsbehälter aufweisenden landwirtschaftlichen Verteilmaschine, insbesondere Schleuderstreuer, wobei die Dosiereinrichtung zumindest eine mit einem verstellbar angeordneten Schieber verschließbare und in ihrer Öffnungsweite einstellbare und im Bodenbereich des Vorratsbehälter angeordnete Auslassöffnung aufweist, wobei der Schieber mittels eines in zwei Einstelleinrichtungen wirksamen Verstellelementes in seine jeweilige Schließ- oder Öffnungsstellung bringbar ist und in seiner Öffnungsstellung eine vorbestimmte Position einnimmt und einen vorbestimmten Querschnitt der Auslassöffnung freigibt, wobei zur Vorbestimmung der Öffnungsstellung des Schiebers eine in verschiedene Positionen einstellbarer Mengeneinstelleinrichtung vorgesehen ist, **dadurch gekennzeichnet, dass** das Verstellelement (13) unmittelbar zwischen dem Schieber (12) und der Mengeneinstelleinrichtung (16) angeordnet ist.

2. Dosiereinrichtung nach Anspruch 1, **dadurch gekennzeichnet, dass** das Verstellelement als doppeltwirkender Hydraulikzylinder (13) ausgebildet ist.

3. Dosiereinrichtung nach Anspruch 1, **dadurch gekennzeichnet, dass** das Verstellelement als mit einer Feder zusammenwirkender einfachwirkender Hydraulikzylinder ausgebildet ist.

4. Dosiereinrichtung nach Anspruch 1, **dadurch gekennzeichnet, dass** die Mengeneinstelleinrichtung (16) als auf einem Schwenkbolzen (14) verschwenkbar angeordneter und in verschiedene Positionen festsetzbarer Schwenkhebel (15) ausgebildet ist.

5. Dosiereinrichtung nach zumindest einem der vorstehenden Ansprüche, **dadurch gekennzeichnet, dass** die Mengeneinstelleinrichtung als auf dem Schwenkbolzen (14), auf dem der Schieber (12) gelagert ist, verschwenkbar angeordneter und in verschiedene Positionen festsetzbarer Schwenkhebel (15) ausgebildet ist.

6. Dosiereinrichtung nach zumindest einem der vorstehenden Ansprüche, **dadurch gekennzeichnet, dass** der Schieber (12) eine Ausdehnung aufweist, die sich zumindest sich über den doppelten Öffnungswinkel der Auslassöffnung (11) erstreckt.

## Claims

1. Metering device of an agricultural distributing machine having a storage container, in particular centrifugal spreader, wherein the metering device has at least one outlet opening which is closable with an adjustably arranged slide, can be set in the opening width thereof and is arranged in the bottom region of the storage container, wherein the slide can be brought into the respective closing or opening position thereof by means of an adjustment element, which is effective in two setting directions, and, in the opening position thereof takes up a predetermined position and opens up a predetermined cross section of the outlet opening, wherein a quantity-setting device which can be set into different positions is provided for predetermining the opening position of the slide, **characterized in that** the adjustment element (13) is arranged directly between the slide (12) and the quantity-setting device (16) .

2. Metering device according to Claim 1, **characterized in that** the adjustment element is designed as a double-action hydraulic cylinder (13).

3. Metering device according to Claim 1, **characterized in that** the adjustment element is designed as a single-action hydraulic cylinder which interacts with a spring.

4. Metering device according to Claim 1, **characterized in that** the quantity-setting device (16) is designed as a pivot lever (15) which is arranged pivotably on a pivot pin (14) and is fastenable in different positions.

5. Metering device according to at least one of the preceding claims, **characterized in that** the quantity-setting device is designed as a pivot lever (15) which is arranged pivotably on the pivot pin (14), on which the slide (12) is mounted, and is fastenable in different positions.

6. Metering device according to at least one of the preceding claims, **characterized in that** the slide (12) has an extent which extends at least over twice the opening angle of the outlet opening (11).

## Revendications

1. Dispositif de dosage d'une machine distributrice agricole, en particulier d'un épandeur centrifuge, comprenant un réservoir, le dispositif de dosage comprenant au moins une ouverture de sortie qui peut être fermée à l'aide d'un tiroir disposé de manière déplaçable, dont la largeur d'ouverture peut être ajustée et qui est disposée dans la région de fond du réservoir, le tiroir pouvant être amené à sa position de fermeture ou d'ouverture respective au moyen d'un élément d'ajustage opérant dans deux sens de réglage et, dans sa position d'ouverture, occupant une position prédéterminée et libérant une section transversale prédéterminée de l'ouverture de sortie, un dispositif de réglage de débit pouvant être réglé dans différentes positions pour prédéterminer la position d'ouverture du tiroir étant prévu, **caractérisé en ce que** l'élément d'ajustage (13) est disposé directement entre le tiroir (12) et le dispositif de réglage de débit (16) .

2. Dispositif de dosage selon la revendication 1, **caractérisé en ce que** l'élément d'ajustage est réalisé sous forme de cylindre hydraulique à double action (13).

3. Dispositif de dosage selon la revendication 1, **caractérisé en ce que** l'élément d'ajustage est réalisé sous forme de cylindre hydraulique à simple action coopérant avec un ressort.

4. Dispositif de dosage selon la revendication 1, **caractérisé en ce que** le dispositif de réglage de débit (16) est réalisé sous forme de levier pivotant (15) disposé de manière pivotante sur un axe de pivotement (14) et pouvant être fixé dans différentes positions.

5. Dispositif de dosage selon au moins l'une quelconque des revendications précédentes, **caractérisé en ce que** le dispositif de réglage de débit est réalisé sous forme de levier pivotant (15), disposé de manière pivotante sur l'axe de pivotement (14) sur lequel le tiroir (12) est monté, et pouvant être fixé dans différentes positions.

6. Dispositif de dosage selon au moins l'une quelconque des revendications précédentes, **caractérisé en ce que** le tiroir (12) présente une étendue qui s'étend au moins sur le double de l'angle d'ouverture de l'ouverture de sortie (11).
